# EUROPÄISCHE PATENTSCHRIFT

(11) **EP 1 446 597 B1**
(45) Veröffentlichungstag und Bekanntmachung des Hinweises auf die Patenterteilung: **24.02.2010**
(21) Anmeldenummer: 02769840.6
(22) Anmeldetag: 07.11.2002
(51) Int. Cl.: F16J 15/26

(54) **IN SEGMENTE UNTERTEILTER ÖLABSTREIFRING**
OIL SCRAPER RING DIVIDED INTO SEGMENTS
BAGUE RACLEUSE D'HUILE DIVISEE EN SEGMENTS

(30) Priorität: 22.11.2001 CH 21542001
(43) Veröffentlichungstag der Anmeldung: 18.08.2004
(73) Patentinhaber: MT Sealing Technology Inc., 8472 Ohringen (CH)
(72) Erfinder: MÜLLER, Urs, CH-8442 Hettlingen (CH)
(74) Vertreter: Schneider Feldmann AG Patent- und Markenanwälte
(86) Internationale Anmeldenummer: PCT/CH2002/000601
(87) Internationale Veröffentlichungsnummer: WO 2003/044400

(56) Entgegenhaltungen:
- WO-A-91/14890
- DE-A- 19 506 683
- US-A- 4 706 971

## Beschreibung

Die vorliegende Erfindung betrifft einen in Segmente unterteilten Oelabstreifring, der durch mindestens eine umlaufende Feder zusammengehalten ist, insbesondere für Kolbenstangen von Schiffsdieselmotoren, mit mehreren über den Umfang verteilten Oelentlastungsbohrungen und mindestens einer zur Kolbenstangenseite gerichteten Oelabstreiflamellen.

Oelabstreifringe sind üblicherweise in Segmente unterteilt und durch mindestens eine umlaufende Feder zusammengehalten. Hierbei liegt der Oelabstreifring an der Kolbenstange an und streift mittels der Oelabstreiflamellen das an der Kolbenstange vorhandene Oel weitgehend ab um sicherzustellen, dass das Motorenöl aus dem Bereich des Kurbelgehäuses nicht in den Bereich des Spülluftraumes gelangt und dadurch ein erheblicher Verbrauch des Motorenöles auftritt. Die Oelabstreiflamellen unterliegen dabei einer Abnutzung, ebenso wie auch die Kolbenstange. Entsprechend müssen die Oelabstreifringe regelmässig ersetzt werden. Stellt man die Oelabstreifringe mit den entsprechenden Oelabstreiflamellen aus einem härteren, weniger Verschleiss unterliegenden Material her, so wird zwangsläufig der Abrieb an der Kolbenstange vergrössert. Auch hierdurch wird entsprechend die Leckage vergrössert.

Oelabstreifringe der eingangs genannten Art sind beispielsweise aus der US-4,210,338, US-4,473,232 und der DE-24,43,299-A bekannt. Die in diesen Dokumenten offenbarten Oelabstreifringe bestehen aus einem einzigen Ring, der in ein oder mehrere Segmente unterteilt ist und üblicherweise mindestens zwei Abstreiflamellen aufweist. Zwischen den Abstreiflamellen verbleibt ein Zwischenraum, in dem sich dort ansammelndes Oel über entsprechende Oelentlastungsbohrungen entweichen kann. Der Oelabstreifring ist mittels mindestens einer umlaufenden Feder zusammengehalten. Sind die vorhandenen Oelabstreiflamellen weitgehend abgenutzt, so müssen die gesamten Oelabstreifringe ersetzt werden. Dies ist entsprechend kostspielig.

Ferner ist aus der PCT/CH91/00052 (WO 91/14890) eine Stopfbuchsendichtung bekannt mit einer Vielzahl von Oelabstreifringen, die aus selbstschmierendem Kunststoff gefertigt sind. Diese Oelabstreifringe haben sich ausserordentlich bewährt, hat sich dadurch doch die Abnutzung an den Kolbenstangen wesentlich reduziert und entsprechend der Oelverbrauch drastisch gesenkt.

Oelabstreifringe gemäss der PCT/CH91/00052 (WO 91/14890) müssen aus hochwertigem Kunststoff gefertigt werden, wie z.B. PEEK (Polyetheretherketon), welches hohe Stossfestigkeit, Ermüdungstoleranz und Kriecheigenschaften aufweist und in Oel-Wassergemischen auch bei hohen Drückern und Temperaturen über 340°C noch einsetzbar ist. Diese Kunststoffe sind jedoch ausserordentlich teuer mit Preisen um 300 sFr./kg.

Auf dem Markt sind Oelabstreifringe der Firma MAN B&W A/S erhältlich, bei denen der Oelabstreifring in Segmente unterteilt ist und durch mindestens eine umlaufende Feder zusammengehalten ist, wobei vorzugsweise über den Umfang verteilt mehrere Oelentlastungsbohrungen in den Segmenten des Oelabstreifringes angebracht sind und wobei der Oelabstreifring zwei parallele Nuten aufweist, in denen passgenaue, auswechselbare Abstreiflamellen aus Grauguss angebracht sind. Zwischen den beiden auswechselbaren Abstreiflamellen sind die Oelentlastungsbohrungen angebracht, die den Oelabstreifring durchsetzen. Der Vorteil dieser bekannten Oelabstreifringe liegt darin, dass bei einer entsprechenden Revision lediglich die auswechselbaren Oelabstreiflamellen ersetzt werden müssen. Nachteilig ist jedoch die hiermit verbundene grosse Abnutzung an der Kolbenstange.

Eine analoge Lösung, bei der nur die Lamellen aus Kunststoff gefertigt sind, hat keine brauchbaren Resultate gebracht, sondern führte von Beginn weg zu einem erhöhten Oelverbrauch.

Es ist daher die Aufgabe der vorliegenden Erfindung, einen Oelabstreifring zu schaffen, bei dem das erwähnte Problem nicht mehr auftritt und bei einer Revision im Prinzip trotzdem nicht der gesamte Oelabstreifring ersetzt werden muss und gleichzeitig der Vorteil bestehen bleibt, dass die Oelabstreiflamellen aus einem weicheren, stärker verschleissenden Material sein können als der Rest des Oelabstreifringes, womit die Abnutzung an der Kolbenstange und der damit verbundene Oelverlust vermieden werden kann.

Diese Aufgabe löst ein Oelabstreifring der eingangs genannten Art mit den Merkmalen des Patentanspruches 1.

Es wurde eine Lösung gefunden, bei der nicht mehr die Abstreiflamellen separat in entsprechenden Nuten kraftschlüssig gehalten sind, sondern diese Abstreiflamellen zusammen in einem Einlegeringsegment kombiniert sind und dieses entsprechende Einlegeringsegment formschlüssig in einem wiederverwendbaren Halteringsegment gehalten ist. Dies führt zu wesentlichen Kosteneinsparungen gegenüber den Oelabstreifringen, die vollständig aus Kunststoff sind und Wahrung der Vorteile dieser Oelabstreifringe aus Kunststoff.

Weitere vorteilhafte Ausgestaltungsformen des Erfindungsgegenstandes gehen aus den abhängigen Ansprüchen hervor und deren Bedeutung wird in der nachfolgenden Beschreibung an Hand der beiliegenden Zeichnungen erläutert.

In der Zeichnung ist eine bevorzugte Ausführungsform des Erfindungsgegenstandes dargestellt sowie eine schematische Darstellung des den nächstliegenden, auf dem Markt erhältlichen Stand der Technik bildenden Oelabstreifringes.

Es zeigt:
- Figur 1: eine Aufsicht auf ein Segment eines Oelabstreifringes auf die in der Einbaulage zum Kurbelgehäuse gerichtete Seite;
- Figur 2: einen Vertikalschnitt durch das Segment des Oelabstreifringes nach Figur 1 entlang der Linie II-II und
- Figur 3: einen weiteren vertikalen Schnitt durch dasselbe Element entlang der Linie III-III in Figur 1.
- Figur 4: zeigt ein Element des Oelabstreifringes nach Figur 1 mit Blick auf die äussere Seite des Segmentes unter Weglassung der umlaufenden Federn.
- Figur 5: zeigt einen schematischen Schnitt durch eine abgenutzte Kolbenstange mit fünf Oelabstreifringsegmenten gemäss der Erfindung, während
- Figur 6: dieselbe Situation bei Verwendung eines dreiteiligen Oelabstreifringes gemäss Stand der Technik zeigt.
- Figur 7: zeigt eine Seitenansicht eines Kolbens mit abgenutzter Kolbenstange.
- Figur 8: zeigt ein Segment eines Oelabstreifringes gemäss Stand der Technik in gleicher Ansicht wie die erfindungsgemässe Lösung in Figur 1 und
- Figur 9: einen Vertikalschnitt durch das bekannte Element gemäss Figur 8 entlang der Linie VI-VI.

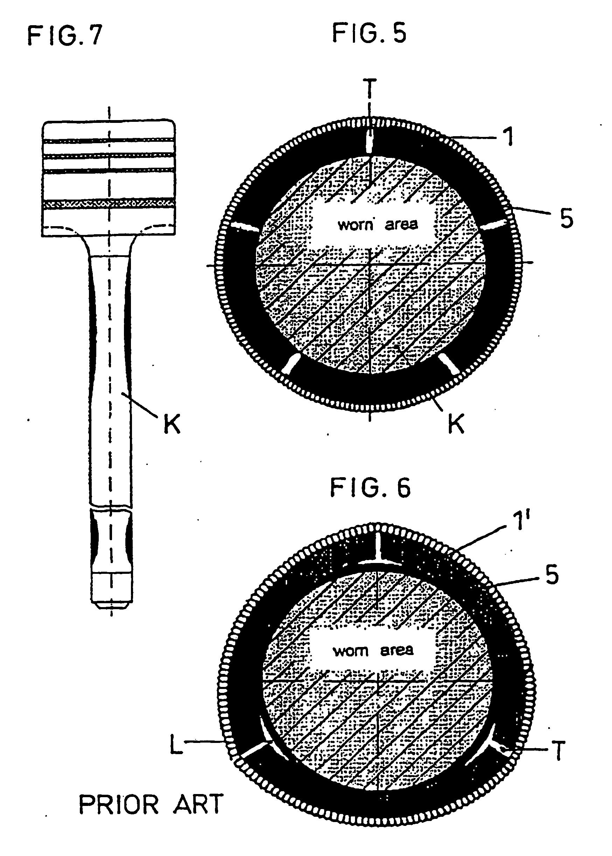

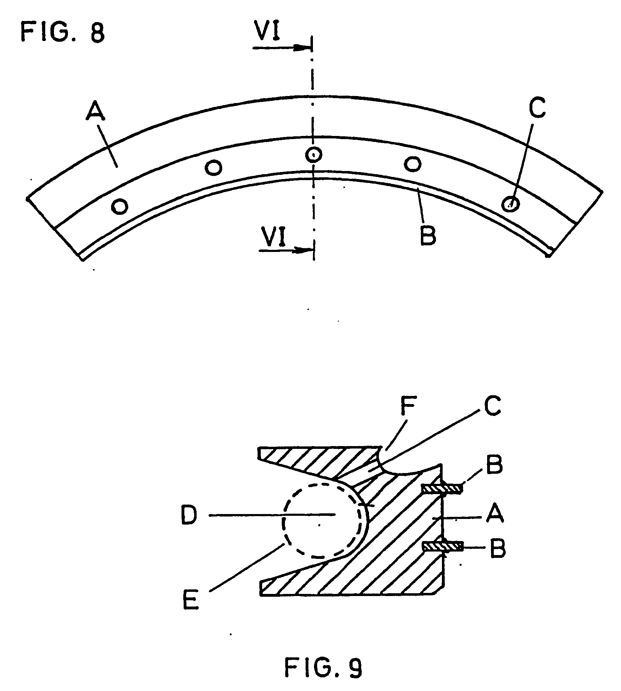

Vorerst sei nochmals auf den bekannten Stand der Technik hingewiesen, entsprechend dem auf dem Markt erhältlichen Oelabstreifring der Firma MAN B&W A/S. Ein solcher Oelabstreifring ist in den Figuren 8 und 9 dargestellt. Ein einzelnes Oelabstreifringsegment A ist in der Ansicht von oben in der Figur 7 dargestellt. Dieser Oelabstreifring, der in der Figur 8 im Schnitt gezeigt ist, besteht aus einem massiven Metallkörper, in dem in entsprechenden Nuten passgenau zwei Abstreiflamellen B form- und kraftschlüssig gehalten sind. Oelabstreifseitig ist eine seitliche Ausnehmung F eingelassen. Das abgestreifte Oel läuft in diese seitliche Ausnehmung F, in deren Boden Oelentlastungsbohrungen C eingelassen sind, die in einer Lagernut D münden. Die Lagernut D dient zur Aufnahme einer ein- oder mehrstückigen umlaufenden Feder E.

Die Flexibilität bei der Verwendung von Lamellen aus Kunststoff lässt auch eine Fünferteilung des Oelabstreifringes 1 zu, wie die Figur 5 zeigt. Hierdurch ist eine bessere Formanpassung an einer abgenutzten Kolbenstange K, wie in Figur 7 dargestellt, möglich. Die bekannten Leckstellen L im Bereich der Ringteilung T werden weitgehend vermieden.

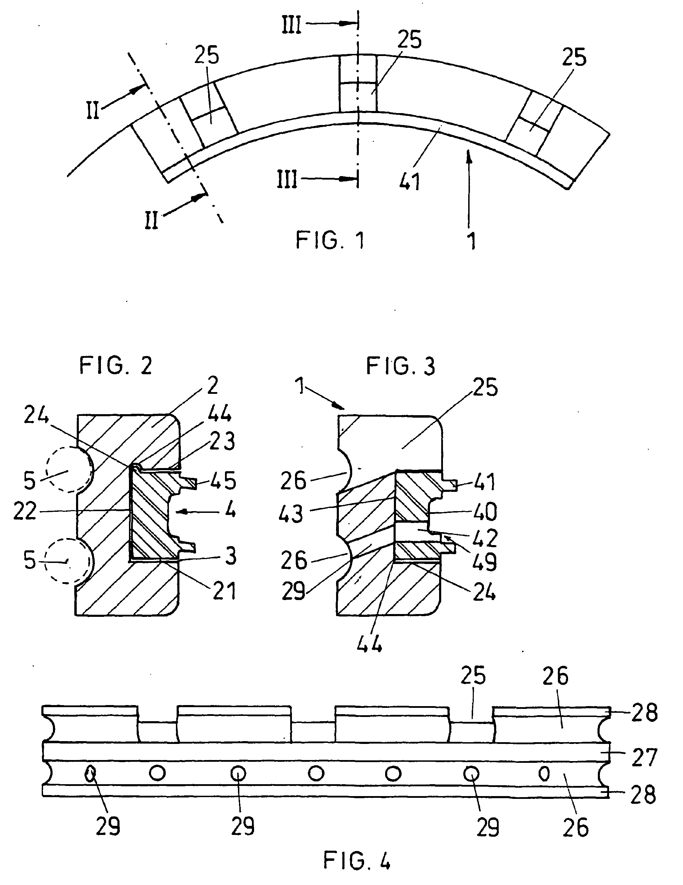

Ein Oelabstreifring gemäss der Erfindung ist gesamthaft mit der Bezugszahl 1 bezeichnet und in der Figur 1 in einer Ansicht von oben dargestellt. Dieser Oelabstreifring 1, der in Segmente unterteilt ist, besteht im wesentlichen aus zwei ineinander geschobenen Ringsegmenten. Ein äusseres Ringsegment bildet hierbei ein Halteringsegment 2, in dem in einem entsprechenden Nut 3 ein Einlegeringsegment 4 eingeschoben ist. Ein vollständiger Oelabstreifring besteht somit aus einer vorgegebenen Anzahl Halteringsegmenten 2 und ebenso vielen Einlegeringsegmenten 4. Im zusammengebauten Zustand werden die Oelabstreifringsegmente 1 von einer oder mehreren umlaufenden Federn zusammengehalten. Diese Federn 5 können aus einem Stück oder aus mehreren Stücken, die zu einem geschlossenen Ring aus Zugfedern gebildet sind, zusammengehalten sein. Jedes Oelabstreifringsegment hat einen eigentlichen kreisbogenförmigen Körper 20 mit einem im wesentlichen rechtwinkligen Querschnitt, in dessen Innenfläche eine umlaufende, U-förmige Nut 21 eingelassen ist. Diese umlaufende Nut 21 hat einen Nutboden 22 und ist gegenüber den Seitenflächen 23 durch mindestens einen Hinterstich 24 verbreitert.

Auf der zum Kurbelgehäuse hin abgelegenen Oberfläche des Körpers 20 des Halteringsegmentes 2 sind radial verlaufende, gleichmässig verteilt angeordnete Ausfräsungen 25 angebracht, die das Abfliessen des abgestreiften Oeles erleichtern. Diese Ausfräsungen 25 erstrecken sich bis auf die Tiefe des auf jener Seite verlaufenden Hinterstichs 24. Auf der der Kolbenstange abgelegenen Seite sind zwei Rillen 26 eingeformt, die parallel zueinander verlaufen. Zwischen den genannten beiden umlaufenden Rillen 26 verbleibt ein Steg 27, der auf derselben Höhe verläuft wie die beiden Seitenkanten 28. Vom Nutenboden 22 nach aussen durchsetzen den Körper 20 eine Vielzahl in gleichmässiger Anordnung verteilter Oelentlastungsbohrungen 29.

In den erwähnten U-förmigen Nuten 21 der Halteringsegmente 2 liegt jeweils ein formschlüssig mit Spiel darin gehaltenes Einlegeringsegment 4. Das Einlegeringsegment 4 hat einen bogenförmigen Körper 40 mit im Querschnitt etwa rechteckiger Form, weist mindestens eine vorzugsweise jedoch zwei zur Kolbenstange hin, also an der Innenseite zum Zentrum hin gerichtete Abstreiflamellen 41 auf. Die Abstreiflamellen 41 sind einstückig aus dem bogenförmigen Körper 40 herausgeformt. Zwischen den beiden Abstreiflamellen 41 verbleibt ein etwas vertiefter Oelspülraum 42. An der umlaufenden Grundfläche 43 ist mindestens eine seitliche vorstehende Wulst 44 angeformt, die formschlüssig in den oder die erwähnten Hinterstiche 24 beim Nutenboden 22 eingreift beziehungsweise eingreifen. Entsprechend lassen sich die Einlegeringsegmente 4 in die Halteringsegmente 2 lediglich von der Seite einschieben, sind jedoch in radialer Richtung gegen Verschiebungen gesichert. Wie bereits erwähnt verbleibt zwischen den Seitenwänden 23 der U-förmigen Nut 21 und den Seitenwänden der Einlegeringsegmente 4 ein gewisses Spiel. Dieses Spiel besteht ebenso zwischen dem Nutenboden 22 und der Grundfläche 43 des Einlegeringsegmentes 4. Damit ist sichergestellt, dass die Einlegeringsegmente 4 in den Halteringsegmenten 2 eine gewisse, insbesondere relative Verschiebbewegung der Elemente zulassen und zudem eine minimale Oeldurchspülung in dieser Spalte aufrechterhalten bleibt.

Zusätzlich sind im Einlegeringsegment 4 mehrere Entlastungsbohrungen 49 angebracht, durch welche das abgestreifte Oel, das zwischen den beiden Abstreiflamellen 41 anfällt, in die U-förmige Nut 21 gelangen kann und von dort durch die Oelentlastungsbohrungen 29 abgeführt werden kann. Die Entlastungsbohrungen 49 und 29 sind miteinander in kommunizierender Verbindung. Sinnvollerweise wird man die Verteilung der Entlastungsbohrungen 49 im Einlegeringsegment 4 in gleicher Teilung anordnen wie die Entlastungsbohrungen in den Halteringsegmenten 2.

Die hier dargestellte Ausführungsform stellt lediglich eine bevorzugte Ausführungsformen Erfindungsgegenstandes dar. So können selbstverständlich die Querschnittsformen der Halteringsegmente und Einlegeringsegmente von den hier gezeigten Formen abweichen. Insbesondere kann statt einer U-förmigen Nut 21 auch eine Nut vorgesehen sein, die sich im Querschnitt zur Nutenbodenfläche hin erweitert. Die Querschnittsform der Einlegeringsegmente 4 muss entsprechend deckungsgleich gestaltet sein. Dies ergibt entsprechend eine typische Federnutverbindung. Die Federnutgestaltung kann auch lediglich einseitig vorhanden sein, während die andere Seite rechtwinklig ausgestaltet sein kann. Auf diese Weise lassen sich die Einlegeringsegmente nur in einer definierten Lage in die Halteringsegmente einbauen. Gerade wenn die Lamellen geneigt angeordnet sind, ist dies absolut essentiell.

Selbstverständlich können die Halteringsegmente 2 auch statt mit zwei parallelen Rillen 25 lediglich mit einer Rille 26 oder auch mit mehreren Rillen 26 ausgestaltet sein und entsprechend lassen sich die Oelabstreifringsegmente mit ebenso vielen umlaufenden Zugfedern 5 zusammenhalten. Auch die nicht zwingend vorhanden sein müssenden Ausfräsungen 25 können durchaus andere Ausgestaltungsformen aufweisen. Wie hier dargestellt sind die Abstreiflämellen 41 hier geneigt zur Kolbenstangenlängsachse verlaufend ausgestaltet. Dies erhöht die Oelabstreifwirkung, vergrössert die Auflagefläche und reduziert entsprechend den spezifischen Anlagedruck, wodurch die Abnutzung der Kolbenstange nochmals reduziert wird.

Das erwähnte Spiel zwischen den Halteringsegmenten und den Einlegeringsegmenten beträgt hier üblicherweise zwischen einem bis wenigen Zehntelmillimetern. Dieses scheinbar grosse Spiel muss allerdings in Relation zu den hier üblichen Dimensionen gesehen werden. Die hier beschriebene Technologie ist für Schiffsdieselmaschinen ausgelegt und die hier interessierenden Durchmesser der Kolbenstangen sind typischerweise mehrere hundert Millimeter im Durchmesser.

Durch die Einfräsungen 25 einerseits und durch die Oelentlastungsbohrungen 29 andererseits gelangt das abgestreifte Oel immer in den Bereich beider umlaufender Federn 5, die somit ebenfalls auf einem Oelfilm lagern.

Dank der erfindungsgemässen Gestaltung des Oelabstreifringes lassen sich hier auch optimale Materialpaarungen realisieren. Entsprechend kann man die kräfteübertragenden Halteringsegmente 2 problemlos aus einem gewünschten preiswerten Maschinenstahl fertigen, wohingegen man die Einlegeringsegmente 4 aus wesentlich weicherem Kunststoff fertigen kann. Bildet man die Abstreiflamellen senkrecht zur Kolbenstangenoberfläche verlaufend aus, so müssen diese entsprechend wesentlich breiter als Lamellen aus Stahl und breiter als die zuvor erwähnten geneigt verlaufenden Varianten gestaltet sein.

Bei der Verwendung der erfindungsgemässen Materialkombination von Kunststoff und Metall ist zu beachten, dass die entsprechenden Wärmeausdehnungskoeffizienten sich wesentlich unterscheiden. Dies führt dazu, dass im Kaltzustand das Einlegeringsegment mit Spiel im Halteringsegment liegt, während im heissen Gebrauchszustand dieses Spiel praktisch kaum noch vorhanden ist. Von diesen Ueberlegungen aus ist man von den heute ausschliesslich verwendeten dreiteiligen Oelabstreifringen erfindungsgemäss zu solchen aus fünf Segmenten übergegangen, um das erforderliche Spiel besser kompensieren zu können. Hierbei hat sich bei einem Langzeitversuch gezeigt, dass durch diese Lösung auch die Dichtheit gegenüber der Kolbenstange auch bei einer teilweise abgenutzten Kolbenstange noch wesentlich höher ist als bei einem dreiteiligen Oelabstreifring.

### Liste der Bezugszeichen

### Stand der Technik

A Oelabstreifring
B eingesetzte Abstreiflamellen
C Oelentlastungsbohrungen
D Lagernut
E Feder
F seitliche Ausnehmung

### Erfindung

1 Oelabstreifringsegment
2 Halteringsegment
3 Nut
4 Einlegeringsegment
5 Federn
20 Körper
21 U-förmige Nut
22 Nutboden
23 Seitenflächen
24 Hinterstiche
25 Ausfräsungen
26 Rillen
27 Steg
28 Seitenkanten
29 Oelentlastungsbohrungen
40 bogenförmiger Körper
41 Abstreiflamellen
42 Spülraum
43 Grundfläche
44 Seitliche Wulste
45 Angeschliffene Phasen
49 Entlastungsbohrungen

## Patentansprüche

1. In Segmente unterteilter Oelabstreifring (1), der durch mindestens eine umlaufende Feder (5) zusammengehalten ist, insbesondere für Kolbenstangen von Schiffsdieselmotoren, mit mehreren über den Umfang verteilten Oelentlastungsbohrungen (29) und mindestens einer zur Kolbenstangenseite gerichteten, parallelen Oelabstreiflamelle (41), **dadurch gekennzeichnet, dass** jedes Segment des Oelabstreifrings aus einem Halteringsegment (2) aus Metall mit einer Nut (3) mit formschlüssig mit Spiel darin in Umfangsrichtung verschiebbarem Einlegeringsegment (4) aus Kunststoff mit mindestens einer Abstreiflamelle besteht.

2. Oelabstreifring nach Anspruch 1, **dadurch gekennzeichnet, dass** der Oelabstreifring in fünf Segmente unterteilt ist.

3. Oelabstreifring nach Anspruch 1, **dadurch gekennzeichnet, dass** im Nutenboden (22) der Halteringsegmente (2) Oelentlastungsbohrungen (29) angebracht sind, die mit Oelentlastungsbohrungen in den Einlegeringsegmenten (4) kommunizieren.

4. Oelabstreifring nach Anspruch 1, **dadurch gekennzeichnet, dass** die Oelentlastungsbohrungen der Halteringsegmente (2) und Einlegeringsegmente (4) in der Einbaulage miteinander mindestens annähernd fluchtend verlaufen.

5. Oelabstreifring nach Anspruch 1, **dadurch gekennzeichnet, dass** die Querschnitte der Halteringsegmente (2) und Einlegeringsegmente (4) feder-nutförmig zusammenpassend gestaltet sind.

6. Oelabstreifring nach Anspruch 5, **dadurch gekennzeichnet, dass** die Nut in den Halteringsegmenten (2) asymmetrisch gestaltet ist.

7. Oelabstreifring nach Anspruch 5, **dadurch gekennzeichnet, dass** im Bereich des Nutenbodens (22) mindestens einseitig ein axial gerichteter Hinterstich (24) angebracht ist und die Einlegeringsegmente (4) eine darin eingreifende Wulst (44) aufweisen.

8. Oelabstreifring nach Anspruch 1, **dadurch gekennzeichnet, dass** zwei oder mehr parallel verlaufende Abstreiflamellen vorhanden sind.

9. Oelabstreifring nach Anspruch 8, **dadurch gekennzeichnet, dass** die Abstreiflamellen in Bezug zur Längsrichtung der zu dichtenden Kolbenstange geneigt verlaufen.

10. Oelabstreifring nach Anspruch 1, **dadurch gekennzeichnet, dass** das Einlegeringsegment einseitig angeordnete Einlegesicherheitsmittel zur Definition der Einbaulage im Halteringsegment aufweist.

11. Oelabstreifring nach Anspruch 7 und 10, **dadurch gekennzeichnet, dass** die Wulst (44) als Einlegesicherheitsmittel dient.

## Claims

1. An oil scraper ring (1) that is divided into segments and is held together by at least one circumferential spring (5), in particular for piston rods of ship diesel motors, having a plurality of oil discharge boreholes (29) distributed around the circumference and at least one parallel oil scraper lamella (41) directed to the piston-rod side, **characterised in that** each segment of the oil separator ring consists of a metallic retaining ring segment (2) with a groove (3) having a plastic insertion ring segment (4) that can be slid thereinto in the circumferential direction in a positive manner with play and that has at least one scraping lamella.

2. The oil scraper ring as specified in claim 1, **characterised in that** the oil scraper ring is divided into five segments.

3. The oil scraper ring as specified in claim 1, **characterised in that** oil discharge boreholes (29) are placed in the bottom of the grooves (22) of the retaining ring segment (2) that communicate with oil discharge boreholes in the insertion ring segments (4).

4. The oil scraper ring as specified in claim 1, **characterised in that** the oil discharge boreholesof the retaining ring segments (2) and of the insertion ring segments (4) run at least nearly aligned with one another in the post assembly position.

5. The oil scraper ring as specified in claim 1, **characterised in that** the cross-sections of the retaining ring segments (2) and of the insertion ring segments (4) are configured to fit together in a tongue-and-groove like manner.

6. The oil scraper ring as specified in claim 5, **characterised in that** the groove in the retaining ring segments (2) is configured asymmetrically.

7. The oil scraper ring as specified in claim 5, **characterised in that** in the region of the bottom of the groove (22), an axially directed undercut (24) is placed on at least one side and the insertion ring segments (4) have a bead (44) that engages therewith.

8. The oil scraper ring as specified in claim 1, **characterised in that** two or more parallely running scraper lamellae are provided.

9. The oil scraper ring as specified in claim 8, **characterised in that** the scraper lamellae run slanted relating to the longitudinal direction of the piston rod to be sealed.

10. The oil scraper ring as specified in claim 1, **characterised in that** the insertion ring segment has insertion securing means arranged on one side to define the assembly position in the retaining ring segment.

11. The oil scraper ring as specified in claims 7 and 10, **characterised in that** the bead (44) serves as insertion securing means.

## Revendications

1. Anneau racleur d'huile (1) divisé en segments, qui est maintenu solidarisé par au moins un ressort (5) en faisant le tour, notamment destiné à des tiges de piston de moteurs diesel de navires, comportant plusieurs alésages de décharge d'huile (29) répartis sur la circonférence et au moins une lamelle de raclage d'huile (41) orientée parallèlement au côté de la tige de piston, **caractérisé en ce que** chaque segment de l'anneau racleur d'huile est constitué d'un segment d'anneau de retenue (2) en métal avec une rainure (3) avec un segment d'anneau d'insertion (4) en plastique comportant au moins une lamelle de raclage, déplaçable avec du jeu dans celui-ci dans la direction circonférentielle par conjonction de forme.

2. Anneau racleur d'huile selon la revendication 1, **caractérisé en ce que** l'anneau racleur d'huile est divisé en cinq segments.

3. Anneau racleur d'huile selon la revendication 1, **caractérisé en ce que** dans le fond de rainure (22) des segments d'anneau de retenue (2), des alésages de décharge d'huile (29) sont ménagés, lesquels communiquent avec des alésages de décharge d'huile dans les segments d'anneau d'insertion.

4. Anneau racleur d'huile selon la revendication 1, **caractérisé en ce que** les alésages de décharge d'huile des segments d'anneau de retenue (2) et des segments d'anneau d'insertion (4) s'étendent au moins approximativement en alignement les uns avec les autres dans la position de montage.

5. Anneau racleur d'huile selon la revendication 1, **caractérisé en ce que** les sections transversales des segments d'anneau de retenue (2) et des segments d'anneau d'insertion (4) sont conçus afin de s'assortir en forme de joint à rainure et languette.

6. Anneau racleur d'huile selon la revendication 5, **caractérisé en ce que** la rainure est maintenue asymétriquement dans les segments d'anneau de retenue (2).

7. Anneau racleur d'huile selon la revendication 5, **caractérisé en ce que** au niveau du fond de rainure (22), au moins d'un côté, une dépouille (24) orientée axialement est ménagée et les segments d'anneau d'insertion (4) présentent un bourrelet (44) s'engageant dans celle-ci.

8. Anneau racleur d'huile selon la revendication 1, **caractérisé en ce que** deux ou plusieurs lamelles de raclage s'étendant parallèlement sont présentes.

9. Anneau racleur d'huile selon la revendication 8, **caractérisé en ce que** les lamelles de raclage s'étendent en inclinaison par rapport à la direction longitudinale de la tige de piston à étanchéifier.

10. Anneau racleur d'huile selon la revendication 1, **caractérisé en ce que** le segment d'anneau d'insertion présente d'un côté des moyens de sécurité d'insertion à des fins de définition de la position de montage dans le segment d'anneau de retenue.

11. Anneau racleur d'huile selon la revendication 7 et 10, **caractérisé en ce que** le bourrelet (14) sert de moyen de sécurité d'insertion.
